# EUROPÄISCHE PATENTSCHRIFT

(11) **EP 1 573 194 B1**
(45) Veröffentlichungstag und Bekanntmachung des Hinweises auf die Patenterteilung: **26.04.2006**
(21) Anmeldenummer: 03778280.2
(22) Anmeldetag: 21.10.2003
(51) Int. Cl.: F02G 1/04, F01B 17/04

(54) **WÄRMEKRAFTMASCHINE**
THERMODYNAMIC ENGINE
MOTEUR THERMIQUE

(30) Priorität: 19.12.2002 DE 10259488
(43) Veröffentlichungstag der Anmeldung: 14.09.2005
(73) Patentinhaber: Bayerische Motoren Werke Aktiengesellschaft, 80809 München (DE)
(72) Erfinder: HOETGER, Michael, 13503 Berlin (DE); CLEMENS, Herbert, 13505 Berlin (DE); HAAS, Tobias, 10318 Berlin (DE); FREITAG, Gunnar, 10555 Berlin (DE); FREYMANN, Raymond, 80935 München (DE); OBIEGLO, Andreas, 81925 München (DE); PREIS, Michael, 86343 Königsbrunn (DE)
(86) Internationale Anmeldenummer: PCT/EP2003/011731
(87) Internationale Veröffentlichungsnummer: WO 2004/057173

(56) Entgegenhaltungen:
- EP-A- 1 249 580
- WO-A-02/31319
- PATENT ABSTRACTS OF JAPAN vol. 1996, no. 10, 31. Oktober 1996 (1996-10-31) & JP 08 144850 A (OSAKA GAS CO LTD), 4. Juni 1996 (1996-06-04)

## Beschreibung

Die Erfindung betrifft eine Wärmekraftmaschine gemäß der Merkmale im Oberbegriff des Patentanspruchs 1.

Sie geht von der WO 02/31320 A1 aus. In dieser ist eine Wärmekraftmaschine für eine Brennkraftmaschine beschrieben, die nach dem Rankine-Kreisprozess arbeitet. Die Wärmekraftmaschine zeichnet sich dadurch aus, dass sie zwei parallele Rankine-Kreisprozesse aufweist. In jedem Rankine-Kreisprozess fördert eine Pumpe eine Flüssigkeit zuerst durch einen Wärmetauscher der an einem Abgasstrang einer Brennkraftmaschine angeordnet ist, wobei die Flüssigkeit verdampft wird, weiter in eine Entspannungseinrichtung in der der Heißdampf eine Flügelzellenpumpe antreibt und weiter in einen Kondensator in dem der Restdampf auskondensiert wird. Anschließend durchläuft die Flüssigkeit denselben Kreislauf wieder. Um den Wirkungsgrad der Wärmekraftmaschine zu verbessem, werden in den Kreisläufen Flüssigkeiten mit unterschiedlichem Siedepunkt eingesetzt. Bei der vorgeschlagenen Ausgestaltung erhält derjenige Kreislauf die Flüssigkeit mit der höheren Siedetemperatur, dessen Wärmetauscher näher an der Brennkraftmaschine angeordnet ist. Dieser Kreislauf ist ein Hochtemperaturkreislauf, während der zweite Kreislauf ein Niedertemperaturkreislauf ist. Um den Wirkungsgrad des Hochtemperaturkreislaufes auf einem hohen Niveau zu halten, ist dessen Pumpe eine variable Förderpumpe.

Obwohl der Wirkungsgrad der Wärmekraftmaschine durch o. g. Maßnahmen verbessert wird, gibt die Brennkraftmaschine immer noch eine große Menge Wärmeenergie ungenutzt an die Umgebung ab.

Aufgabe der vorliegenden Erfindung ist es, den Wirkungsgrad einer Wärmekraftmaschine in Verbindung mit einer Brennkraftmaschine nochmals zu erhöhen.

Diese Aufgabe wird erfindungsgemäß dadurch gelöst, dass neben der Abwärme, welche die Brennkraftmaschine durch den Abgasstrang abführt, auch die Abwärme des Kühlmittelkreislaufes der Brennkraftmaschine ausgenutzt wird, um das Arbeitsmedium des Niedertemperaturkreislaufes, das erste Arbeitsmedium, zu temperieren Unter Temperierung wird vorwiegend eine Aufheizung verstanden. Das auf diese Weise vorgewärmte, bzw. aufgeheizte flüssige erste Arbeitsmedium wird anschließend von einer Pumpe aus einem Sammelbehälter abgepumpt und über eine Eindüsvorrichtung wieder in den Niedertemperaturkreislauf rückgedüst. Das Eindüsen erfolgt hierbei im ersten Wärmetauscher, um das vorgewärmte erste Arbeitsmedium schnellstmöglich - abhängig vom Wärmeangebot und der Lastanforderung - im Niedertemperaturwärmekreislauf wieder verdampfen zu lassen. Der auf diese Weise erzeugte Drucküberschuss im Niedertemperaturkreislauf wird in einer Entspannungseinrichtung in zusätzliche Bewegungsenergie umgewandelt. Durch die Tempenerung, bzw. Aufheizung des ersten Arbeitsmediums mit Hilfe des Kühlmittelkreislaufes der Brennkraftmaschine wird die von der Brennkraftmaschine abgegebene Wärmemenge deutlich besser zur Erzeugung von mechanischer Energie ausgenutzt. Bei richtiger Dimensionierung der Wärmekraftmaschine kann im Kühlmittelkreislauf in vorteilhafter Weise ein vorhandener Kühler verkleinert werden oder sogar entfallen. Die Wärmeabfuhr von der Brennkraftmaschine über das Kühlmittel erfolgt dann ausschließlich im ersten Sammelbehälter des Niedertemperaturkreislaufes. Durch die zusätzliche Einspritzmöglichkeit im Niedertemperaturkreislauf können sehr kurze Reaktionszeiten, d. h. Ansprechzeiten der Entspannungsvorrichtung, erreicht werden. Grundsätzlich erlaubt die Trennung der beiden Kreisläufe eine große Flexibilität bei der Betriebsstrategie. Um diesen Vorteil noch weiter auszubauen, ist im Hochtemperaturkreislauf eine zusätzliche Heizvorrichtung angeordnet, mit der das zweite, bereits dampfförmige Arbeitsmedium sehr schnell weiter aufgeheizt und somit überhitzt wird. Durch das vorgeschlagene Konzept erhält das Gesamtsystem einen höheren Wirkungsgrad. Weitere vorteilhafte Ausgestaltungen sind Gegenstand der Unteransprüche.

Gemäß der Patentansprüche 2 und 3 besteht die Möglichkeit, das im ersten Sammelbehälter gesammelte erste Arbeitsmedium sowohl in gasförmiger als auch in flüssiger Phase zwischenzuspeichern. Aufgrund dieser Phasentrennung besteht die Möglichkeit, den gasförmigen Anteil und den flüssigen Anteil getrennt zu heizen. Während das gasförmige erste Arbeitsmedium über den ersten Wärmetauscher der Entspannungsvorrichtung zugeführt wird, wird das Arbeitsmedium in flüssiger Phase über die Eindüsvorrichtung im Bereich des ersten Wärmetauschers in den Niedertemperaturkreislauf rückgedüst, dort verdampft und in die Entspannungsvorrichtung geführt. Durch diese Maßnahme wird die Dynamik der Wärmekraftmaschine erhöht.

Eine weitere Wirkungsgradsteigerung erfährt der Niedertemperaturkreislauf durch die im Patentanspruch 4 vorgeschlagene Maßnahme, das erste Arbeitsmedium im ersten Sammelbehälter von dem, von der Entspannungseinrichtung kommenden zweiten Arbeitsmedium mit dessen Restwärme zusätzlich zu temperieren. Aufgrund dieser Maßnahme wird auch die Energie, die im zweiten Arbeitsmedium nach der Entspannungseinrichtung noch enthalten ist, in vorteilhafter Weise an den Niedertemperaturkreislauf abgegeben, bevor das zweite Arbeitsmedium in einem Kondensator abgekühlt und verflüssigt wird.

Auch im Hochtemperaturkreislauf befindet sich gemäß Patentanspruch 5 ein zweiter Sammelbehälter zum Auffangen des verflüssigten zweiten Arbeitsmediums. Der zweite Sammelbehälter wird in vorteilhafter Weise dazu genutzt, das zweite Arbeitsmedium vor Einleitung in den zweiten Wärmetauscher mit dem Kühlwasser der Brennkraftmaschine gemäß Patentanspruch 6 vorzuheizen. In dieser Konfiguration wird das Kühlmittel der Brennkraftmaschine zuerst durch den ersten Sammelbehälter im Niedertemperaturkreislauf geleitet und anschließend durch den zweiten Sammelbehälter, um die Restwärmeenergie, die noch in dem Kühlmittel gespeichert ist, zur Vorwärmung, bzw. Aufheizung des Hochtemperaturkreislaufes auszunutzen. Für diese vorgeschlagene Ausgestaltung kann bei optimaler Systemauslegung ein vorhandener Kühlmittelwärmetauscher entweder verkleinert werden oder entfallen.

Gemäß Patentanspruch 7 und 8 kann die Heizvorrichtung entweder elektrisch und/oder mit einem Brennstoff, der vorzugsweise derselbe Brennstoff wie für die Brennkraftmaschine ist, betrieben werden. Durch diese Maßnahme ist ein einziger Brennstofftank ausreichend, zusätzliche Brennstoffe sind nicht notwendig. Bei einer mit Benzin betriebenen Brennkraftmaschine bietet sich die Verwendung einer Benzin-Heizvorrichtung, bei einer Diesel-Brennkraftmaschine eine Diesel-Heizvorrichtung und für eine gasbetriebene Brennkraftmaschine eine Gasheizvorrichtung an. Bei Verwendung einer elektrischen Heizvorrichtung sind sehr kurze Aufheiaeiten erreichbar.

Um die Überhitzung des zweiten Arbeitsmediums zu erreichen, ist die Heizvorrichtung gemäß der Patentansprüche 9 und 10 radial um die Abgasanlage angeordnet, vorzugsweise zwischen zwei katalytischen Reinigungsvorrichtungen. Durch diese Anordnung wird wiederum die Wärmeenergie des Abgases bestmöglich genutzt, um den Hochtemperaturkreislauf zu überhitzen. Die Energieentnahme aus dem Abgas erfolgt derart, dass die motomahe katalytische Reinigungsvorrichtung, der Vorkatalysator, schnell seine Betriebstemperatur erhält, um die Abgase von ungewünschten Stoffen zu reinigen. Die motorfeme katalytische Reinigungsvorrichtung, der Hauptkatalysator, ist in Strömungsrichtung hinter der Heizvorrichtung angeordnet und ist somit weitgehend vor einer Überhitzung geschützt. Der Schutz wird auch dadurch erreicht, dass die Heizvorrichtung, die gleichzeitig ein Wärmeübertrager ist, vor dem Hauptkatalysator angeordnet ist.

Der erste und der zweite Wärmetauscher sind gemäß Patentanspruch 11 hinter der zweiten katalytischen Reinigungsvorrichtung angeordnet, um dem Abgas nicht vor den katalytischen Reinigungsvorrichtungen zu viel Wärmeenergie zu entziehen und damit die katalytische Wirkung aufgrund zu niedriger Temperatur aufzuheben. Aufgrund der vorgeschlagenen Anordnung der zwei katalytischen Reinigungsvorrichtungen, der Heizvorrichtung und des zweiten und des ersten Wärmetauschers, wird der bestmögliche Gesamtwirkungsgrad erzielt.

Durch die Regelung des Volumenstroms der Arbeitsmedien durch die Entspannungseinrichtung gem. Patentanspruch 12 für den Nieder- und den Hochtemperaturkreislauf sind die Betriebsbedingungen der Wärmekraftmaschine an die Betriebsbedingungen der Brennkraftmaschine anpassbar. Bei Volllastbetrieb der Brennkraftmaschine, d. h. hohe bis maximale abgegebene Leistung, wird der maximale Volumenstrom der Arbeitsmedien eingestellt, um die bestmögliche Energieausbeute zu erzielen. Bei Teillastbetrieb, bzw. stop- and go-Betrieb, d. h. bei mittlerer bis wenig abgegebener Leistung, wird der Volumenstrom der Arbeitsmedien entsprechend reduziert.

Aufgrund der Anordnung einer zusätzlichen Pumpe im Niedertemperaturkreislauf zwischen dem Kondensator und dem ersten Sammelbehälter gemäß Patentanspruch 13 kann im Kondensator ein Unterdruck erzeugt werden. Durch diesen Unterdruck wird das erste Arbeitsmedium zu noch tieferen Temperaturen hin verflüssigt und anschließend in den ersten Sammelbehälter weitergepumpt. Mit der dritten Pumpe wird der Wirkungsgrad des Niedertemperaturkreislaufes nochmals verbessert.

Im Folgenden ist die Erfindung anhand einer schematischen Darstellung eines bevorzugten Ausführungsbeispiels in einer einzigen Figur näher erläutert.

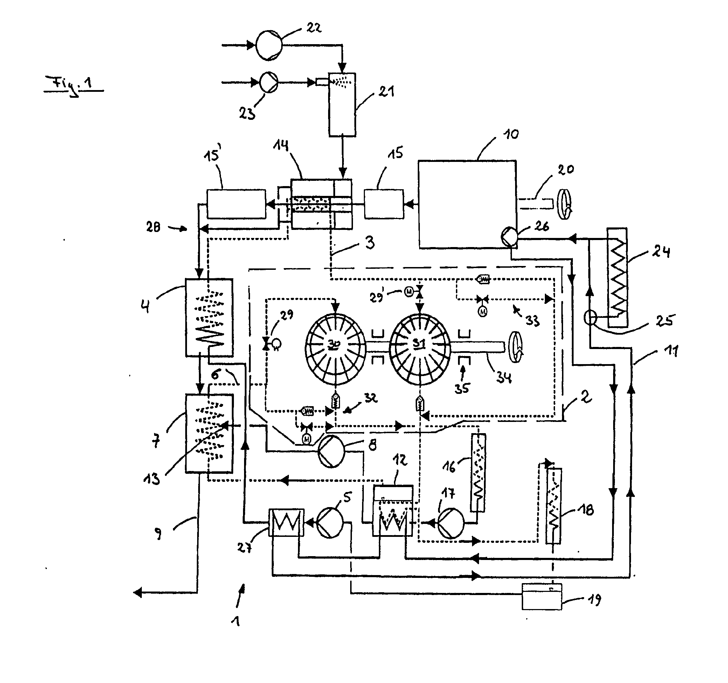

Fig. 1 zeigt schematisch eine Brennkraftmaschine 10, deren Abtriebsleistung an einer ersten Abtriebswelle 20 durch eine Wärmekraftmaschine 1 unterstützt wird. Die Brennkraftmaschine 10 weist eine Abgasanlage 9 zur Abfuhr der Abgase auf. Die Abgasanlage 9 ist durch Pfeile in Strömungsrichtung des Abgases dargestellt. In die Abgasanlage 9 sind zwei katalytische Reinigungsvorrichtungen 15, 15' integriert. Die katalytische Reinigungsvorrichtung 15 ist ein Vorkatalysator, die katalytische Reinigungsvorrichtung 15' ist ein Hauptkatalysator. Die Wärmekraftmaschine 1 weist im Wesentlichen zwei voneinander getrennte Rankine-Kreisläufe auf, einen geschlossenen Niedertemperaturkreislauf 6 und einen geschlossenen Hochtemperaturkreislauf 3. In dem Niedertemperaturkreislauf 6 fördert eine dritte Pumpe 17 ein erstes Arbeitsmedium in einen ersten Sammelbehälter 12. Das flüssige erste Arbeitsmittel ist durch eine durchgezogene Linie, das dampfförmige Arbeitsmittel ist durch eine punktierte Linie dargestellt. Im Sammelbehälter 12 ist das erste Arbeitsmedium sowohl flüssig als auch gasförmig zwischengespeichert. Die Pumpe 17 fördert das flüssige erste Arbeitsmedium aus dem ersten Sammelbehälter 12 in einen ersten Wärmetauscher 7, wo das gasförmige erste Arbeitsmedium überhitzt wird. Nach der Überhitzung wird der Heißdampf des ersten Arbeitsmediums in eine Entspannungseinrichtung 2, bestehend im Wesentlichen aus einem Niedertemperaturexpander 30 und einem Hochtemperaturexpander 31, eingeleitet. In dem Niedertemperaturexpander 30 wird der Heißdampf entspannt und anschließend einem ersten Kondensator 16 zugeführt. In dem ersten Kondensator 16 kondensiert das erste Arbeitsmedium aus und wird anschließend von der dritten Pumpe 17 wieder in den Sammelbehälter 12 gefördert. Ein Teil des flüssigen ersten Arbeitsmediums im ersten Sammelbehälter 12 wird von einer ersten Pumpe 8 in den ersten Wärmetauscher 7 gepumpt und dort von einer Eindüsvorrichtung 13 in den Niedertemperaturkreislauf 6 eingedüst. Mit der Eindüsvorrichtung 13 im Niedertemperaturkreislauf 6 wird der Volumen- bzw. Massenstrom des ersten Arbeitsmittels im Niedertemperaturkreislauf 6 mitgeregelt.

Der zweite Rankine-Kreislauf, der Hochtemperaturkreislauf 3, weist ein zweites Arbeitsmedium auf, dessen Dampf-, bzw. Flüssigkeitsdarstellung dem ersten Arbeitsmedium entspricht. Im Hochtemperaturkreislauf 3 pumpt eine zweite Pumpe 5 aus einem zweiten Sammelbehälter 19 das zweite Arbeitsmedium in einen Vorheizbehälter 27. Von dort wird das zweite Arbeitsmittel weitergefördert in einen zweiten Wärmetauscher 4, in dem das zweite Arbeitsmedium verdampft wird. Der Dampf wird zur Überhitzung in einen Wärmeübertrager einer Heizvorrichtung 14 weitergeleitet. Dieser überhitzte Dampf wird anschließend dem Hochtemperaturexpander 31 der Entspannungseinrichtung 2 zugeführt, in dem der überhitzte Dampf entspannt und in abgekühlter Form in den ersten Sammelbehälter 12 weitergeleitet wird, um das erste Arbeitsmedium vorzuwärmen, bzw. aufzuheizen. Anschließend wird das zweite Arbeitsmedium einem zweiten Kondensator 18 zugeführt und so weit abgekühlt, dass dieses auskondensiert und wieder im zweiten Sammelbehälter 19 aufgefangen wird.

Ferner weist die Brennkraftmaschine 10 einen Kühlmittelkreislauf 11 auf. In diesem Kühlmittelkreislauf 11 pumpt eine vierte Pumpe 26 das aufgeheizte Kühlmittel der Brennkraftmaschine zuerst in den ersten Sammelbehälter 12, um das flüssige erste Arbeitsmittel aufzuheizen und weiter in den Vorheizbehälter 27, um mit der Restwärmeenergie auch das zweite Arbeitsmittel vorzuwärmen. Anschließend wird das abgekühlte Kühlmittel in die Brennkraftmaschine 10 zurückgepumpt. Wie im Ausführungsbeispiel dargestellt, kann im Kühlmittelkreislauf 11 ein zusätzliches Schaltventil 25 angeordnet sein, mit dem das Kühlmittel durch einen dritten Kondensator 24, einen Motorkühler, geleitet und weiter abgekühlt werden kann, bevor es der Brennkraftmaschine zurückgeführt wird.

Die Heizvorrichtung 14 ist ein Stationärbrenner, der einen Wärmeübertrager beinhaltet und zwischen den zwei katalytischen Reinigungsvorrichtungen 15, 15' angeordnet ist, eine alternative Anordnung wird später noch erläutert. Sie wird mit dem gleichen Brennstoff, hier Benzin, betrieben wie die Brennkraftmaschine 10. Eine Luftpumpe 22 und eine Kraftstoffpumpe 23 pumpen die jeweiligen Reaktanden in einen Gemischaufbereiter 21, von dem aus das aufbereitete Brennstoff/Luft-Gemisch der Heizvorrichtung 14 zugeführt wird. Entsprechend dem jeweiligen Energiebedarf von Hoch- und Niedertemperaturkreislauf 3, 6 ist der erste Wärmetauscher 7 des Niedertemperaturkreislaufes 6 am kühleren Ende der Abgasanlage 9 angeordnet, in Strömungsrichtung davor, im heißeren Bereich, ist der zweite Wärmetauscher 4 des Hochtemperaturkreislaufes 3 angeordnet. Die Heizvorrichtung 14, die für die Überhitzung des zweiten Arbeitsmediums sorgt, ist zwischen den katalytischen Reinigungsvorrichtungen 15, 15' angeordnet und derart geregelt, dass die reinigenden Eigenschaften der katalytischen Reinigungsvorrichtung 15' nicht beeinträchtigt werden. Die Heizvorrichtung 14 erstreckt sich radial um die Abgasanlage 9 herum, um einen optimalen Wärmeübergang zwischen dem heißen Abgas und dem zweiten Arbeitsmedium zu erzielen. Altemativ kann sie auch nur an einem Teilumfang der Abgasanlage 9 angeordnet werden. Das Abgas der Heizvorrichtung 14 wird nach der katalytischen Reinigungsvorrichtung 15' durch eine Abgaseinleitung 28 in die Abgasanlage 9 eingeleitet und steht somit ebenfalls zur Temperierung, bzw. Aufheizung des ersten und des zweiten Arbeitsmediums im ersten und im zweiten Wärmetauscher 7, 4, zur Verfügung.

In der Entspannungseinrichtung 2 übertragen der Niedertemperaturexpander 30 und der Hochtemperaturexpander 31, die in Bewegungsenergie umgewandelte Wärmeenergie auf eine zweite Abtriebswelle 34. Die Abtriebswelle 34 ist in einer schematisch dargestellten Lagerung 35 gelagert. Im Zulauf des Niederdruckexpanders 30 befindet sich ein elektromotorisch betriebenes Regelventil 29, sowie zwischen Zulauf und Dampfaustritt eine erste Regeleinrichtung 32, bestehend aus zwei Rückschlagventilen sowie einem motorisch betriebenen Regelventil. Mit der Regeleinrichtung 32 wird der Dampf-Volumenstrom durch den Niederdruckexpander 30 unter Anderem zur Drehzahlregelung geregelt. Ebenso verfügt der Hochdruckexpander 31 über ein elektromotorisch betriebenes Regelventil 29' in seinem Zulauf, sowie parallel zu seinem Zulauf und Dampfauslass, eine zweite Regeleinrichtung 33, bestehend ebenfalls aus zwei Rückschlagventilen sowie einem motorisch betriebenen weiteren Regelventil. Auch die zweite Regeleinrichtung 33 dient unter Anderem der Volumenstromregelung von Dampf durch den Hochtemperaturexpander 31 zur Drehzahlregelung. Die von der Entspannungseinrichtung 2 an der zweiten Abtriebswelle 34 abgegebene mechanische Leistung wird über ein nicht dargestelltes Kupplungselement sowie eine nicht dargestellte Übersetzung, bei der es sich auch um eine Untersetzung handeln kann, auf die erste Abtriebswelle 20 übertragen und der Abtriebsleistung der Brennkraftmaschine 10 überlagert.

Abweichend von dem Ausführungsbeispiel kann jeder der Kondensatoren 16, 18, 24 einen zusätzlichen Ventilator zur Kühlung aufweisen. Die Pumpe 17 zwischen dem ersten Sammelbehälter 12 und dem ersten Kondensator 16 kann im ersten Kondensator 16 einen Unterdruck erzeugen, wodurch die Kondensation und Abkühlung des ersten Arbeitsmediums wesentlich unterstützt wird, was eine weitere Entspannung des ersten Arbeitsmediums bedeutet. Der Durchfluss des Kondensators 18 kann auch kurzgeschlossen werden, so dass das von der Entspannungseinrichtung 2 kommende zweite Arbeitsmedium direkt in den zweiten Sammelbehälter 19 rückgeführt wird.

Wenn die Brennkraftmaschine 10 mit einem anderen Brennstoff als Benzin, z. B. Diesel-, oder Gas betrieben wird, wird auch die Heizvorrichtung 14 vorzugsweise mit diesem Brennstoff betrieben. Unabhängig von dem verwendeten Brennstoff kann die Heizvorrichtung 14 eine zusätzliche elektrische Heizung zur schnellen Aufheizung beinhalten bzw. komplett als elektrische Heizung dargestellt werden.

In einem weiteren Ausführungsbeispiel kann die katalytische Reinigungsvorrichtung 15' auch zwischen dem ersten Wärmetauscher 7 und dem zweiten Wärmetauscher 4 angeordnet werden. Wird für diesen Fall eine Beheizung der katalytischen Reinigungsvorrichtung 15' notwendig, so kann diese beispielsweise elektrisch erfolgen.

Da das Kühlmittel der Brennkraftmaschine 10 sowohl zum Temperieren, d. h. Aufheizen des Niedertemperaturkreislaufes 6 als auch des Hochtemperaturkreislaufes 3 ausgenutzt wird, können bei optimaler Systemauslegung der dritte Kondensator 24 und das Schaltventil 25 entfallen. Bei weiterer Systemoptimierung kann in der Entspannungseinrichtung 2 sowohl dem ersten als auch dem zweiten Arbeitsmedium soviel Energie entzogen werden, dass auch der erste und der zweite Kondensator 16, 18, entfallen können. Für diese Fälle werden die Arbeitsmedien nach der Entspannungseinrichtung 2 direkt in die Sammelbehälter 12 bzw. 19 eingeleitet. In einer dritten Variante ist der dritte Kondensator 24, sowie das Schaltventil 25 vorhanden und der erste und der zweite Kondensator 16, 18 entfallen. Unter Schaltventilen 25 werden auch Regelventile verstanden.

In einer anderen Ausführungsform der Wärmekraftmaschine kann der Vorheizbehälter 27 entfallen. In diesem Fall wird das Kühlmittel vom ersten Sammelbehälter 12 direkt in Richtung Brennkraftmaschine 10 rückgeführt.

Der Niedertemperaturexpander 30 und der Hochtemperaturexpander 31 sind in der Darstellung starr mit der zweiten Abtriebswelle 34 verbunden. Es ist auch möglich, für jeden Expander 30, 31 eine eigene Abtriebswelle und/oder einen Freilauf vorzusehen, die wiederum über eine Kupplung, mit oder ohne fester oder variabler Übersetzung miteinander und mit der ersten Abtriebswelle 20 verbindbar sind.

Zusammenfassend können für die vorgeschlagene Vorrichtung folgende Vorteile angeführt werden:
- Das vorgeschlagene Konzept hat einen hohen Wirkungsgrad;
- Die Dynamik der Wärmekraftmaschine kann über die Regeleinrichtungen 32 und 33, über die Pumpen 5, 8 und 17, sowie die Eindüsvorrichtung geregelt werden;
- Für den Hochtemperaturkreislauf 3 und den Niedertemperaturkreislauf 6 kann jeweils das ideale Arbeitsmedium genutzt werden; z. B. ein Alkohol für den Niedertemperaturkreislauf 6 und Wasser für den Hochtemperaturkreislauf 3;
- Die Funktion des Mittelschalldämpfers kann durch den ersten und den zweiten Wärmetauscher 7, 4 übemommen werden;
- Die Integration des ersten und zweiten Wärmetauschers 7, 4 in das Abgasrohr 9 zwischen den katalytischen Reinigungsvorrichtungen 15, 15' erlaubt eine kompakte Bauweise;
- Die Konstruktion hat zusätzlich die Funktion einer Abgasrohrisolation zwischen den katalytischen Reinigungsvorrichtungen 15, 15'.

### Bezugszeichenliste

- 1: Wärmekraftmaschine
- 2: Entspannungseinrichtung
- 3: Hochtemperaturkreislauf
- 4: Zweiter Wärmetauscher
- 5: Zweite Pumpe
- 6: Niedertemperaturkreislauf
- 7: Erster Wärmetauscher
- 8: Erste Pumpe
- 9: Abgasanlage
- 10: Brennkraftmaschine
- 11: Kühlmittelkreislauf
- 12: Erster Sammelbehälter
- 13: Eindüsvorrichtung
- 14: Heizvorrichtung
- 15, 15': Katalytische Reinigungsvorrichtung
- 16: Erster Kondensator
- 17: Dritte Pumpe
- 18: Zweiter Kondensator
- 19: Zweiter Sammelbehälter
- 20: Erste Abtriebswelle
- 21: Gemischaufbereiter
- 22: Luftpumpe
- 23: Kraftstoffpumpe
- 24: Dritter Kondensator
- 25: Schaltventil
- 26: Vierte Pumpe
- 27: Vorheizbehälter
- 28: Abgaseinleitung
- 29, 29': Regelventil
- 30: Niedertemperaturexpander
- 31: Hochtemperaturexpander
- 32: Erste Regeleinrichtung
- 33: Zweite Regeleinrichtung
- 34: Zweite Abtriebswelle
- 35: Lagerung

## Patentansprüche

1. Wärmekraftmaschine (1), die Heißdampf zumindest eines Arbeitsmediums mittels einer Entspannungseinrichtung (2) in Bewegungsenergie umwandelt, bestehend aus
- einem Niedertemperaturkreislauf (6), in dem ein erstes Arbeitsmedium von einer ersten Pumpe (8) durch einen ersten Wärmetauscher (7) und anschließend durch die Entspannungseinrichtung (2) gefördert wird und
- einem Hochtemperaturkreislauf (3), in dem ein zweites Arbeitsmedium von einer zweiten Pumpe (5) durch einen zweiten Wärmetauscher (4) und anschließend durch die Entspannungseinrichtung (2) gefördert wird, wobei
- der erste Wärmetauscher (7) und der zweite Wärmetauscher (4) an eine Abgasanlage (9) einer Brennkraftmaschine (10) angeordnet sind,
**dadurch gekennzeichnet, dass**
- die Brennkraftmaschine (10) einen Kühlmittelkreislauf (11) aufweist, mit dem das erste Arbeitsmedium in einem ersten Sammelbehälter (12) temperierbar ist,
- der Niedertemperaturkreislauf (6) eine Eindüsvorrichtung (13) aufweist, die aus dem Niedertemperaturkreislauf (6) entnommenes erstes Arbeitsmedium im Bereich des ersten Wärmetauschers (7) wieder in den Niedertemperaturkreislauf (6) eindüst,
- der Hochtemperaturkreislauf (3) zwischen dem zweiten Wärmetauscher (4) und der Entspannungseinrichtung (2) eine Heizvorrichtung (14) für das zweite Arbeitsmedium aufweist.

2. Vorrichtung nach Patentanspruch 1,
**dadurch gekennzeichnet, dass** das erste Arbeitsmedium im ersten Sammelbehälter (12) in gasförmiger und/oder flüssiger Phase vorliegt.

3. Vorrichtung nach Patentanspruch 1 oder 2,
**dadurch gekennzeichnet, dass** die Eindüsvorrichtung (13) das erste Arbeitsmedium in flüssiger Phase wieder in den Niedertemperaturkreistauf (6) eindüst.

4. Vorrichtung nach einem der Patentansprüche 1 bis 3,
**dadurch gekennzeichnet, dass** das erste Arbeitsmedium in dem ersten Sammelbehälter (12) von dem zweiten Arbeitsmedium temperierbar ist.

5. Vorrichtung nach einem der zuvor genannten Patentansprüche,
**dadurch gekennzeichnet, dass** der Hochtemperaturkreislauf (3) einen zweiten Sammelbehälter (19) für das zweite Arbeitsmedium aufweist.

6. Vorrichtung nach einem der zuvor genannten Patentansprüche,
**dadurch gekennzeichnet, dass** das zweite Arbeitsmedium in dem zweiten Sammelbehälter (19) vor Einleitung in den zweiten Wärmetauscher (4) von dem Kühlmittelkreislauf (11) temperierbar ist.

7. Vorrichtung nach einem der zuvor genannten Patentansprüche,
**dadurch gekennzeichnet, dass** die Heizvorrichtung (14) elektrisch und/oder mit einem Brennstoff betreibbar ist.

8. Vorrichtung nach Patentanspruch 7,
**dadurch gekennzeichnet, dass** der Brennstoff für die Heizvorrichtung (14) auch für die Brennkraftmaschine (10) vorgesehen ist.

9. Vorrichtung nach einem der zuvor genannten Patentansprüche,
**dadurch gekennzeichnet, dass** die Heizvorrichtung (14) radial um die Abgasanlage (9) oder zumindest abschnittweise direkt an die Abgasanlage (9) angeordnet ist.

10. Vorrichtung nach einem der zuvor genannten Patentansprüche,
**dadurch gekennzeichnet, dass** die Abgasanlage (9) zwei katalytische Reinigungsvorrichtungen (15, 15') aufweist und die Heizvorrichtung (14) zwischen den katalytischen Reinigungsvorrichtungen (15, 15') oder hinter den katalytischen Reinigungsvorrichtungen (15, 15') angeordnet ist.

11. Vorrichtung nach einem der zuvor genannten Patentansprüche,
**dadurch gekennzeichnet, dass** der erste und der zweite Wärmetauscher (7, 4) in Strömungsrichtung eines Abgases hinter den katalytischen Reinigungsvorrichtungen (15, 15') angeordnet sind.

12. Vorrichtung nach einem der zuvor genannten Patentansprüche,
**dadurch gekennzeichnet, dass** der die Entspannungseinrichtung (2) durchströmende Volumenstrom des ersten und/oder des zweiten Arbeitsmediums steuer- bzw. regelbar ist.

13. Vorrichtung nach einem der zuvor genannten Patentansprüche, wobei der Niedertemperaturkreislauf in Förderrichtung des Arbeitsmediums hinter der Entspannungseinrichtung einen Kondensator aufweist,
**dadurch gekennzeichnet, dass** im Niedertemperaturkreislauf (6) zwischen dem Kondensator (16) und dem ersten Sammelbehälter (12) eine dritte Pumpe (17) angeordnet ist.

## Revendications

1. Moteur thermique (1) qui transforme en énergie cinétique de la vapeur chaude d'au moins un fluide de travail au moyen d'un dispositif de détente (2), constitué par :
- un circuit à basse température (6) dans lequel un premier fluide de travail est acheminé par une première pompe (8) à travers un premier échangeur de chaleur (7) puis à travers le dispositif de détente (2), et
- un circuit à haute température (3) dans lequel un deuxième fluide de travail est acheminé par une deuxième pompe (5) à travers un deuxième échangeur de chaleur (4) puis à travers le dispositif de détente (2),
- les premier et deuxième échangeurs de chaleur (7, 4) étant disposés au niveau d'un système d'échappement (9) d'un moteur à combustion interne (10),
**caractérisé en ce que**
- le moteur à combustion interne (10) présente un circuit de liquide de refroidissement (11) permettant de tempérer le premier fluide de travail dans un premier réservoir collecteur (12),
- le circuit à basse température (6) présente un dispositif d'injection (13) qui réinjecte dans le circuit à basse température (6) le premier fluide de travail, prélevé dans le circuit basse température (6) dans la zone du premier échangeur de chaleur (7),
- le circuit haute température (3) présente, entre le deuxième échangeur de chaleur (4) et le dispositif de détente (2), un dispositif de chauffage (14) pour le deuxième fluide de travail.

2. Dispositif selon la revendication 1,
**caractérisé en ce que**
le premier fluide de travail dans le premier réservoir collecteur (12) est sous forme gazeuse et/ou liquide.

3. Dispositif selon la revendication 1 ou 2,
**caractérisé en ce que**
le dispositif d'injection (13) réinjecte le premier fluide de travail sous forme liquide dans le circuit à basse température (6).

4. Dispositif selon l'une des revendications 1 à 3,
**caractérisé en ce que**
le premier fluide de travail dans le premier réservoir collecteur (12) peut être tempéré par le deuxième fluide de travail.

5. Dispositif selon l'une des revendications précédentes,
**caractérisé en ce que**
le circuit à haute température (3) présente un deuxième réservoir colleteur (19) pour le deuxième fluide de travail.

6. Dispositif selon l'une des revendications précédentes,
**caractérisé en ce que**
le deuxième fluide de travail dans le deuxième réservoir collecteur (19) peut être tempéré avant son introduction dans le deuxième échangeur de chaleur (4) par le circuit de liquide de refroidissement (11).

7. Dispositif selon l'une des revendications précédentes,
**caractérisé en ce que**
le dispositif de chauffage (14) peut fonctionner à l'électricité et/ou avec un carburant.

8. Dispositif selon la revendication 7,
**caractérisé en ce que**
le carburant pour le dispositif de chauffage (14) est également celui prévu pour le moteur à combustion interne (10).

9. Dispositif selon l'une des revendications précédentes,
**caractérisé en ce que**
le dispositif de chauffage (14) est disposé radialement autour du système d'échappement (9) ou au moins par sections directement contre le système d'échappement (9).

10. Dispositif selon l'une des revendications précédentes,
**caractérisé en ce que**
le système d'échappement (9) présente deux dispositifs de nettoyage catalytique (15, 15') et le dispositif de chauffage (14) est disposé entre eux ou derrière eux.

11. Dispositif selon l'une des revendications précédentes,
**caractérisé en ce que**
les premier et deuxième échangeurs de chaleur (7, 4) sont disposés dans la direction d'écoulement des gaz d'échappement derrière les dispositifs de nettoyage catalytiques (15, 15').

12. Dispositif selon l'une des revendications précédentes,
**caractérisé en ce que**
le débit volumique du premier et/ou du deuxième fluide de travail traversant le dispositif de détente (2) peut être commandé ou réglé.

13. Dispositif selon l'une des revendications précédentes, le circuit à basse température présentant, dans la direction d'acheminement du fluide de travail, derrière le dispositif de détente, un condenseur,
**caractérisé en ce qu'**
une troisième pompe (17) est disposée dans le circuit à basse température (6) entre le condenseur (16) et le premier réservoir collecteur (12).

## Claims

1. A thermal engine (1) which converts superheated steam from at least one working medium into kinetic energy, via an expansion device (2), and comprises
- a low-temperature circuit (6) in which the first working medium is conveyed by a first pump (8) through a first heat exchanger (7) and then through the expansion device (2) and
- a high-temperature circuit (3) in which a second working medium is conveyed by a second pump (5) through a second heat exchanger (4) and then through the expansion device (2), wherein
- the first heat exchanger (7) and the second heat exchanger (4) are disposed on an exhaust system (9) of an internal combustion engine (10),
**characterised in that**
- the internal combustion engine (10) comprises a coolant circuit (11) for tempering the first working medium in a first collecting container (12),
- the low-temperature circuit (6) comprises an injection device (13) whereby the first working medium removed from the low-temperature circuit (6) is returned to the low-temperature circuit (6) in the neighbourhood of the first heat exchanger (7) and
- the high-temperature circuit (3) has a heater (14) for the second working medium between the second heat exchanger (4) and the expansion device (2).

2. A device according to claim 1, **characterised in that** the first working medium in the first collecting container (12) is present in a gaseous and/or liquid phase.

3. A device according to claim 1 or 2, **characterised in that** the injection device (13) retums the first working medium to the low-temperature circuit (6) in the liquid phase.

4. A device according to any of claims 1 to 3, **characterised in that** the first working medium in the first collecting container (12) can be tempered by the second working medium.

5. A device according to any of the preceding claims, **characterised in that** the high-temperature circuit (3) comprises a second collecting container (19) for the second working medium.

6. A device according to any of the preceding claims, **characterised in that** the second working medium in the second collecting container (19) can be tempered by the coolant circuit (11) before being introduced into the second heat exchanger (4).

7. A device according to any of the preceding claims, **characterised in that** the heater (14) is electric and/or operated by a fuel.

8. A device according to claim 7, **characterised in that** the fuel for the heater (14) is also provided for the internal combustion engine (10).

9. A device according to any of the preceding claims, **characterised in that** the heater (14) is disposed radially around the exhaust system (9) or at least parts of it are directly mounted on the exhaust system (9).

10. A device according to any of the preceding claims, **characterised in that** the exhaust system (9) comprises two catalytic purifying devices (15, 15') and the heater (14) is disposed between the catalytic purifying devices (15,15') or behind the catalytic purifying devices (15, 15').

11. A device according to any of the preceding claims, **characterised in that** the first and the second heat exchanger (7, 4) are disposed behind the catalytic purifying devices (15, 15') in the flow direction of an exhaust gas.

12. A device according to any of the preceding claims, **characterised in that** the flow rate of the first and/or second working medium through the expansion device (2) can be controlled in an open or closed loop.

13. A device according to any of the preceding claims, wherein the low-temperature circuit comprises a condenser behind the expansion device in the delivery direction of the working medium, **characterised in that** a third pump (17) is disposed in the low-temperature circuit (6) between the condenser (16) and the first collecting container (12).
